# EUROPEAN PATENT SPECIFICATION

(11) **EP 1 363 788 B1**
(45) Date of publication and mention of the grant of the patent: **19.07.2006**
(21) Application number: 02719891.0
(22) Date of filing: 21.02.2002
(51) Int. Cl.: B60C 9/02, B60C 15/00, B60C 15/024, B60C 15/05, B60C 17/06, B60B 21/02

(54) **A TYRE FOR VEHICLE WHEELS WITH SELF-SUPPORT FUNCTIONS, AND A RIM FOR SAID TYRE**
REIFEN FÜR FAHRZEUGRÄDER MIT SELBSTRAGENDER FUNKTION, UND FELGE DAFÜR
PNEUMATIQUE DE VEHICULE A FONCTIONS AUTOPORTEUSES ET JANTE CORRESPONDANTE

(30) Priority: 28.02.2001 EP 01830137; 30.03.2001 US 279694 P
(43) Date of publication of application: 26.11.2003
(73) Proprietor: Pirelli Pneumatici S.p.A., 20126 Milano (IT)
(72) Inventor: CARETTA, Renato, I-21013 Gallarate (VA) (IT)
(74) Representative: Giannesi, Pier Giovanni
(86) International application number: PCT/EP2002/001835
(87) International publication number: WO 2002/068220

(56) References cited:
- WO-A-00/38906
- WO-A-99/64225
- DE-A- 3 505 386
- DE-B- 1 064 275
- US-A- 4 696 333
- PATENT ABSTRACTS OF JAPAN vol. 016, no. 072 (M-1213), 21 February 1992 (1992-02-21) & JP 03 262712 A (SUMITOMO RUBBER IND LTD), 22 November 1991 (1991-11-22)

## Description

The present invention relates to a vehicle wheel with self-support functions comprising: a tyre with a carcass structure having at least one carcass ply with axially-opposite circumferential edges in engagement with respective annular reinforcing structures which are disposed in coaxial relationship with a rotation axis of the tyre at positions axially spaced apart from each other and which are each incorporated into a tyre bead; a belt structure applied to the carcass structure at a radially external position thereof ; a tread band applied to the belt structure at a radially external position thereof; at least one pair of sidewalls each extending between one of said beads and a side edge of the tread band, at an axially external position with respect to the carcass structure.

To the aims of the present invention, by self-support it is intended the tyre capacity, in case of deflation due to failure or puncture, to ensure ride under safety conditions at low speed, to cover short-medium distances sufficient to reach a service area for example, where repair or replacement of the tyre can be carried out.

The invention also relates to a rim, comprising a base body of a substantially annular conformation carrying, at side edges axially spaced apart from each other, two circumferential seats each arranged to engage a respective bead of the tyre itself.

Tyres for vehicle wheels essentially comprise a carcass structure made up of one or more carcass plies that in the most common embodiments have the respective circumferential inner edges turned up around inextensible annular inserts being part of annular reinforcing structures placed at axially opposite positions in the tyre regions usually identified as "beads".

At a position radially external to the carcass ply or plies, a belt structure is applied which comprises one or more belt layers radially superposed in succession. A tread band of elastomer material is then radially superposed on the belt structure. The outer sides of the carcass structure are also covered with respective sidewalls, made of elastomer material as well.

To the aims of the present description, it is to be pointed out that by the term "elastomer material" it is intended a rubber blend in its entirety, that is the assembly made up of at least one base polymer suitably amalgamated with reinforcing fillers and/or process additives of various types.

Usually the tyre beads, and in particular the annular reinforcing structures incorporated thereinto, are conveniently structured and shaped so as to match with the respective circumferential seats arranged on a rim with which the tyre is to be associated, to ensure a steady connection between the two components of a wheel.

In more detail, coupling between each bead and the corresponding circumferential seat of the rim is of such a nature that the bead is constantly pushed, by effect of the tyre inflation pressure, against an abutment shoulder radially jutting out away from the rotation axis of the tyre and defining the axially external edge of the rim. At least in tubeless tyres, i.e. tyres devoid of an air tube, each circumferential seat for engagement of the bead has a frusto-conical surface, hereinafter referred to as "flange", having an extension converging towards the rotation axis on moving close to the equatorial plane of the tyre. Each bead, axially pushed away from the equatorial plane by effect of the inflation pressure, acts in axial thrust relationship against the respective flange so as to ensure a perfect airtightness to the tyre.

Recently, wheels for vehicles have been proposed in which the engagement seats of the tyre beads have a frusto-conical conformation with an extension converging towards the rotation axis away from the equatorial plane. An example of such a rim-tyre assembly is described in US patent 5,634,993. In the embodiment proposed in such a patent, the tyre beads the shape of which matches that of the corresponding rim seats, have annular reinforcing structures comprising usual rings around which the end flaps of the carcass ply are axially turned up. As a whole the carcass structure, of the radial type, has a cross-section profile with a constant bending direction, the tangent of which close to the rings is substantially parallel to the equatorial plane.

In document US 5,971,047 a tyre is described which has beads particularly adapted for use on rims having frusto-conical flanges axially facing outwardly, hereinafter referred to, for the sake of simplicity, as "reverse- flange" rims.

The Applicant has already proposed, in document WO 99/64225, corresponding with the preamble of claim 1 and 24, respectively, technical improvements particularly addressed to simplification of the production process for tyres provided with beads adapted for a reverse-flange rim.

It is the Applicant's feeling that the technical problem to be solved for the purposes of the present invention is to obtain further functional improvements in the above mentioned tyre, particularly in connection with ride comfort, by envisaging new technical solutions aiming at achieving the desired self-support qualities, i.e. the capacity of ensuring ride over short-medium runs in the absence of inflation pressure, following a puncture, for example.

In the United States documents US 5,634,993 and US 5,971,047, for self-support purposes use of a big ring of elastomer material is proposed which is fitted on the rim and arranged to provide a rest seat at the tyre belt to conveniently support the structure during running under deflated conditions.

The Applicant has however understood that, above all on low-section tyres, i.e. tyres in which the ratio between the section height measured between the bead base and the centre of the tread band, and the maximum tyre width is, just as an indication, lower than 0.50, the presence of the annular elastomer insert within the tyre as described in documents US 5,634,993 and US 5,971,047 may impair the tyre ride comfort even under normal use conditions. In fact, the tyre crown portion may easily come into contact with the radially external portion of the annular insert, at the ground-contacting area, above all following impacts transmitted by unevennesses in the road surface, causing direct transmission of the impacts to the vehicle suspensions. In addition, the annular elastomer insert greatly reduces the amount of air in the tyre, the elastic behaviour of which is one of the decisive factors for ride comfort purposes.

Other known solutions usually adopted on tyres for rims having flanges diverging away from the equatorial plane, hereinafter referred to as "right-flange" rims, achieve self-support by arranging appropriate elastomer reinforcing inserts - usually referred to as "lunettes" - at the sidewalls, in combination with suitably strengthened beads to promote the engagement steadiness of same on the respective flanges.

Examples of such embodiments are described in documents GB 2087805, EP 475258 and EP 542252, in which at least one of the elastic-support inserts present at each sidewall is enclosed between two carcass plies forming a sort of closed container around it, so as to achieve good results particularly in connection with the self-supporting capacity of the tyre under deflated conditions.

The Applicant has however understood that placing the elastic-support inserts in a sort of closed container defined by the carcass plies turned up around the annular anchoring structures tends to increase stiffness of the tyre sidewall too much, not only with reference to its vertical flexibility, i.e. in connection with substantially radial stresses with respect to the rotation axis of the tyre, but also with reference to its torsional flexibility, i.e. in connection with stresses directed tangentially of the circumferential extension of the tyre itself.

By adopting particular expedients, as described in documents EP 475258 and EP 542252 in the name of the same Applicant for example, the possibility of restricting, within limits, the vertical stiffness of the sidewall under running conditions with an inflated tyre is achieved. On the other hand, these technical solutions tend to make the tyre structure more complicated and heavier and are not efficient for the purpose of limiting the torsional stiffness which, as found out by the Applicant, is one of the decisive factors in terms of ride comfort, particularly at medium/high speed. In fact, the tyre capacity of absorbing impacts transmitted by potholes or other unevennesses present in a road surface depends on the torsional stiffness of the tyre.

The Applicant has also understood that during running under normal inflated conditions and, even more so, under deflated conditions, the presence of the elastic-support inserts completely enclosed between two carcass plies imposes strong stresses and/or deformations to the inserts themselves as well as to the other tyre building components that are present close to the sidewalls, which will bring about an increase in the operating temperatures and softening of the materials. Thus use of materials having high moduli of elasticity is compulsory, in order to further increase ride comfort with an inflated tyre.

In documents DE 36 17 381 and US 4,572,262 tyred wheels are proposed in which, in order to achieve the possibility of a flat ride, appropriate circumferential toothings are arranged on the rim and the inner walls of the tyre. These toothings lend themselves to operate in mutual engagement relationship at the ground-contacting area following deflation of the tyre, so as to ensure transmission of the longitudinal forces. Also arranged in the crown region of the tyre and in combination with the respective toothing, are circumferential ridges intended for engagement in a race provided in the wheel rim, in an attempt to keep the belt structure and tread band in the right position with respect to the rim during a flat ride.

In the state of the art, these technical expedients are exclusively proposed in combination with tyres the carcass plies of which describe a substantially semicircular profile in the sidewall regions included between the side edges of the tread band and the tyres.

DE 35 05 386 A is related to a vehicle wheel with a rigid rim and a pneumatic tyre essentially made from rubber or rubber-like synthetic materials, which is supported on an emergency running element disposed in the tyre cavity when air escapes and which has a circumferential projection in its part underneath the tread surface which locates in a groove of the emergency running element when air escapes.

DE 10 64 275 B is related to a tracker or guide wheel for agricultural earth-working machines, with an elastically deformable tread strip which is supported on the rim by a large part of its width at the contact patch of the wheel with the ground, in which the tread strip has a projection on the internal face extending in the circumferential direction, which locates in a matching recess of the rim.

JP 03 262712 A is related to an assembled body of tyre and rim comprising protrude lines on the internal surface of the tyre and a core having a supporting piece on the external peripheral surface of which fitting grooves, which can be protrudingly fitted to the internal surface of the rim.

US 4,696,333 is related to a rim for a pneumatic tyre, the beads of which are adapted to be mounted on the radially inner periphery of the rim. The rim has a rim ring that is provided radially inwardly with seating surfaces for the tyre beads. On the lateral edges, the rim ring has essentially radially inwardly extending rim flanges. Furthermore the rim ring is provided radially outwardly with support surfaces for emergency operation when a puncture, flat tyre and so on is encountered.

The Applicant has however understood that this circumstance can impair a correct operation under flat-ride conditions in a decisive manner. In fact, the tyre structure appears to be very weak in relation to the transverse forces directed parallel to its rotation axis, due for example to the gyroscopic effects on the rotating mass of the tyre, the slip thrusts and/or the centrifugal forces occurring on a bend. Therefore a mulfunction of the system is very likely to take place because such transverse forces can give rise to an axial displacement of the belt structure/tread band assembly with respect to the rim and cause a wrong engagement of the circumferential ridges in the race provided in the rim itself.

In accordance with the present invention it has been found that, above all with reference to tyres of very low section, the capacity of running under completely deflated conditions without incurring side movements of the tread band/belt structure assembly with respect to the rim can be brilliantly achieved by combining, in one tyre, beads for reverse-flange rims and at least one circumferential ridge adapted for engagement in a race arranged in the rim.

Preferably, the circumferential ridge or ridges in the tyre and the respective race in the rim are provided in the absence of further toothings or similar transverse projections that are instead required in the prior art for the purpose of ensuring transmission of the longitudinal forces. In fact, in accordance with the present invention, transmission of the longitudinal forces due in particular to torques and/or braking couples transmitted to the wheel during use, exclusively relies on adhesion of the beads to the respective seats arranged in the rim.

It has also been found that, contrary to prejudices derivable from the prior art, accomplishment of ridges internal to the tyre can be achieved without involving particular complications in the building process of same, in particular if the tyre is built following the principles recently developed by the Applicant, as described in the above mentioned document WO 99/64225 for example.

In particular, it is an object of the invention to provide a wheel according to claim 1.

In more detail, it is advantageous that close to said at least one circumferential ridge, further transverse projections for engagement into corresponding seats arranged on a mounting rim of the tyre should not be present.

Preferably, the circumferential centring ridge comprises at least one continuous elongated element wound up in coils that are disposed axially close to and/or radially superposed on each other. This winding is carried out, during the building process of the tyre, within a forming seat arranged in a toroidal support the shape of which matches the inner surface extension of the tyre itself.

Preferably, it is provided that each of said annular reinforcing structures should comprise at least one stiffening portion applied against said at least one carcass ply and having a cross-section profile extending away from the rotation axis of the tyre. Such a stiffening portion is preferably combined with at least one circumferentially inextensible anchoring portion, having a cross-section profile of flattened conformation, extending axially away from the stiffening portion itself in a direction converging towards the geometric rotation axis of the tyre away from the equatorial plane of the latter.

In a preferential embodiment the cross-section profile of the annular reinforcing structure has a geometric centre of gravity placed at such a position that an axially external end edge of said rest surface is pushed towards the rotation axis of the tyre following a tension generated along said at least one carcass ply.

In more detail, it is conveniently provided for said geometric centre of gravity to be placed at an axially external position relative to the stiffening portion and at an axially internal position relative to an axially external end edge of the anchoring portion.

The anchoring portion can be conveniently applied against an end portion of said carcass ply, extending axially away from the equatorial plane of the tyre.

It is also preferably provided that the anchoring portion be disposed substantially close to a radially internal edge of the stiffening portion.

Preferably, the anchoring portion comprises at least one continuous elongated element wound up in coils disposed axially in side by side relationship.

The stiffening portion can in turn comprise at least one continuous elongated element wound up in radially superposed coils.

The circumferential centring ridge preferably has a radial dimension included between 5 and 20 mm, and an axial dimension of at least 10 mm and, at all events, not exceeding 60 mm.

In addition, it is particularly advantageous that the tyre have a section ratio smaller than 0.50.

In accordance with a further preferential feature of the invention, the carcass ply comprises elongated lengths circumferentially distributed around a geometric axis of the tyre and each extending in a U-shaped configuration to define two side portions spaced apart from each other in an axial direction and one crown portion extending at a radially external position between the side portions.

Advantageously, each of the elongated lengths can be disposed in a deposition plane offset in parallel relative to a meridian plane passing through the geometric rotation axis of the tyre.

Under this situation, the side portion of each elongated length can advantageously have a predetermined inclination relative to a direction radial to the geometric axis of the tyre, whereas the crown portions are each oriented in a plane radial to the geometric axis itself.

More particularly, a first and a second series of elongated lengths may be advantageously provided and they are circumferentially distributed in a mutually alternated sequence, the side portions of the lengths belonging to the first and second series respectively being disposed according to respectively crossed orientations.

It is also an object of the present invention to provide a rim for tyres of vehicle wheels, characterized in that each of its engagement seats defines an abutment surface radially facing away from a geometric rotation axis of the rim and having a frusto-conical configuration converging towards said geometric axis away from a median diametrical plane of the rim itself, and in that the base body has at least two opposite radial shoulders axially spaced apart from each other to act in abutment against at least one circumferential centring ridge radially jutting out inwardly from a carcass structure of the tyre.

In addition and advantageously, close to said radial shoulders the absence of any axial grooves arranged to interact with respective projections carried by the tyre is provided.

The radial shoulders advantageously confine a circumferential guide race in the base body, the shape of said race matching that of said circumferential ridge.

In particular, the radial shoulders have an outer diameter that does not exceed a maximum diameter of the rim measurable close to at least one of said engagement seats. In a preferential solution the radial shoulders have a radial dimension included between 5 and 20 mm and are mutually spaced apart by a measure as high as at least 10 mm and, at all events, not exceeding 60 mm.

The radial shoulders are also preferably provided to be defined in a radially external position on a circumferential projection defined in the base body.

The base body advantageously has at least one circumferential groove defined between one of said engagement seats and one of said radial shoulders.

Further features and advantages will become more apparent from the detailed description of a preferred but not exclusive embodiment of a tyre for vehicle wheels with self-support functions and of a respective mounting rim, in accordance with the present invention. This description will be set out hereinafter with reference to the accompanying drawings, given by way of non-limiting example, in which:

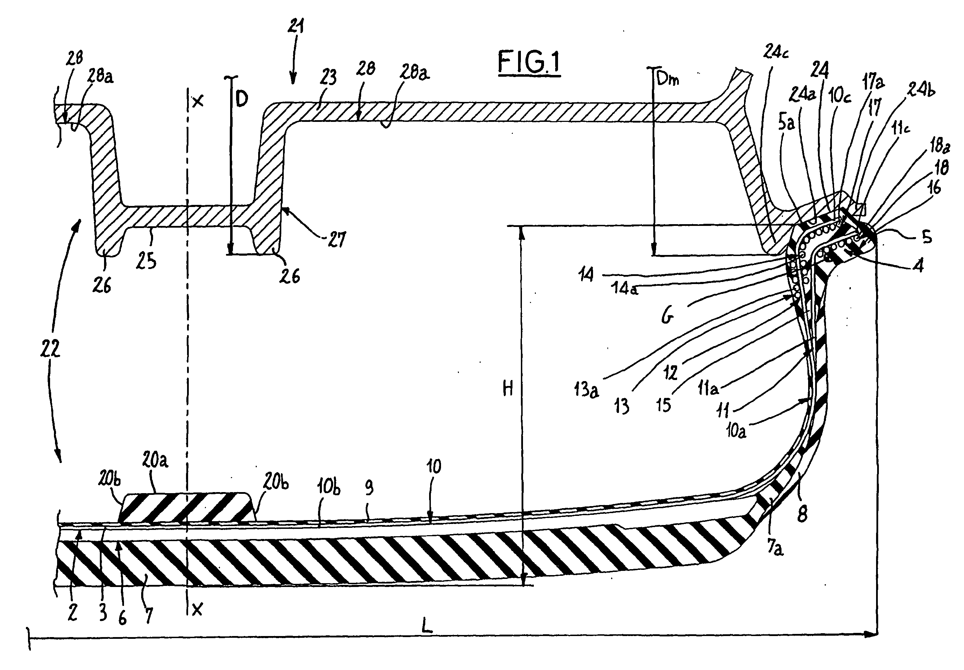

- Fig. 1 is a cross half-section of the tyre in accordance with the present invention, mounted on a respective rim under normal ride conditions;
- Fig. 2 is a diametrical half-section of the tyre shown in Fig. 1 under deflated conditions.

With reference to the drawings, a tyre for vehicle wheels made in accordance with the present invention has been generally identified by reference numeral 1.

Tyre 1 has a carcass structure 2 comprising at least one carcass ply 3 having a substantially toroidal conformation and engaged, by its axially opposite circumferential edges, with a pair of annular reinforcing structures 4 axially spaced apart from each other (only one of which is shown in the drawings), each of which, when the tyre is finished, is placed in the region of tyre 1 usually identified as "bead", generally denoted by 5.

Applied to the carcass structure 2, at a circumferentially external position, is a belt structure 6 comprising one or more belt layers. Circumferentially superposed on the belt structure 6 is a tread band 7 the side edges 7a of which confine a so-called crown portion on the carcass structure 2, said crown portion being disposed at a radially external position. The tread band 7 can be provided with longitudinal and/or transverse grooves, designed to define a desired "tread pattern", formed following a moulding operation carried out concurrently with tyre vulcanization.

Tyre 1 also comprises a pair of so-called "sidewalls" 8, laterally applied to the carcass structure 2 on opposite sides thereof and each extending, just as an indication, in the region included between one of the beads 5 and a corresponding side edge 7a of the tread band 7.

The carcass structure 2 may be optionally covered on its inner walls with a so-called "liner" 9 essentially consisting of at least one layer of air-tight elastomer material adapted to ensure the hermetic seal of the tyre when inflated.

Except for that which is disclosed in more detail in the following of the present description, assembling of the above listed components, as well as production of one or more of same, are preferably carried out following the teachings proposed in one or more of documents WO 99/64225, WO 00/38906 and EP 976535, all in the name of the Applicant itself. In accordance with the description made in the above listed documents, the tyre components are each obtained by laying down on a toroidal support the shape of which matches the inner conformation of the tyre, one or more elements obtained from a elongated semi-finished product continuously fed close to the toroidal support itself.

More particularly, liner 9 can be obtained by winding up a continuous elongated element of an appropriate elastomer material on the outer surface of the toroidal support so as to form a plurality of coils disposed axially close to and/or radially superposed on, each other so as to define one continuous layer adapted to completely cover the inner surface of tyre 1.

Each carcass ply 3 can be in turn made up of a plurality of elongated lengths 10, 11 circumferentially distributed around the geometric axis of tyre 1 and each extending in a U-shaped configuration to define two side portions 10a, 11a mutually spaced apart in an axial direction, and one crown portion 10b extending at a radially external position between the side portions 10a, 11a.

Said lengths made of rubberized fabric can be conveniently arranged by cutting to a predetermined size a continuous ribbon of elastomer material incorporating one or more reinforcing textile or metallic cords (preferably 3 to 14), all that as better described in the copending patent application WO 99/64225.

More particularly, the presence of a first series of elongated lengths 10 and a second series of elongated lengths 11 is preferably provided, said series being laid down on the toroidal support in two steps in succession and having the respective side portions 10a, 11a axially spaced apart from each other by interposition of one or more of the building components belonging to the annular anchoring structures 4. The elongated lengths 10, 11 belonging to the first and second series respectively can be distributed according to a circumferential pitch substantially corresponding to their width, for the purpose of forming two distinct carcass plies. Alternatively, as contemplated in the example shown, the elongated lengths 10, 11 of each series can be distributed according to a circumferential pitch corresponding to a multiple of their width, so that the crown portions of the lengths 11 belonging to the second series are each interposed between the crown portions 10b belonging to two consecutive lengths of the first series 10, so as to form a single carcass ply 3 altogether.

In addition, each of the lengths belonging to the first and second series 10, 11 can extend in a deposition plane offset in parallel relative to a meridian plane passing through the geometric rotation axis of tyre 1, as described in patent application WO 00/38906 in the name of the same Applicant. Under this situation, each side portion 10a, 11a can advantageously have a desired inclination relative to a direction radial to the geometric axis of tyre 1, while keeping the crown portions 10b each oriented in a plane radial to the geometric axis itself. In addition, by arranging the side portions 10a, 11a of the lengths belonging to the first and second series 10, 11 respectively, in a respectively crossed orientation, it will be advantageously possible to increase the torsional strength of the carcass structure 2 and the tyre on the whole, so as to ensure an efficient transmission of the torques and/or braking couples between the beads 5 and the belt structure 6/tread band 7 assembly.

Each of the annular anchoring portions 4 preferably comprises at least one stiffening portion 12 applied against the carcass ply 3 and having a cross-section profile extending away from the rotation axis of tyre 1. In a preferential embodiment, such a stiffening portion 12 comprises a first and a second stiffening elements 13, 14 applied at an axially internal and axially external positions respectively against the side portions 10a of lengths 10 belonging to the first series.

The first stiffening element 13 can be directly formed against the surface of said toroidal support, possibly after application of liner 9 thereto, during a step immediately preceding deposition of the elongated lengths 10 belonging to the first series. The second stiffening element 14 can be in turn directly formed against the side portions 10a of lengths 10 belonging to the first series, during a step preceding deposition of the elongated lengths 11 belonging to the second series.

Preferably, formation of each stiffening element 13, 14 is obtained by winding up of at least one continuous elongated element, in the form of a single thread or a cord of textile and/or metallic material for example, to form at least one series of coils 13a, 14a radially superposed on each other and concentric with the rotation axis of tyre 1.

The continuous elongated element, preferably covered with a thin layer of elastomer material, is preferably made up of a single metallic wire of a diameter included, just as an indication, between 0.7 mm and 1.3 mm, but possibly it can comprise a plurality of thinner wires or threads, that are parallel or twisted in the form of a cord, of metallic or synthetic material. In more detail, to this aim a cord of metallic material may be used which is made up of several strands twisted together preferably in a counter-direction, i.e. a direction opposite to the twisting direction of the individual filaments of each strand. In this case a metallic cord of size 7x4x0.28 is preferred; i.e. a cord consisting of seven strands each made up of four steel wires of a diameter of 0.28 mm. Alternatively, a textile cord of a tensile strength comparable with that of the above described metallic cord can be employed. In this case use of an aramidic fibre is preferred and more preferably use of the one known on the market under the name Kevlar®.

In combination with, or in place of at least one of the stiffening elements 13, 14, the stiffening portion 12 may include at least one filling body 15 of elastomer material preferably having a hardness at least as high as 60 Shore, which is axially interposed between the side portions 10a, 11a of lengths 10, 11 belonging to the first and second series respectively and such shaped that its cross-section profile tapers away from the rotation axis of the tyre, as viewed from the accompanying figures.

The annular anchoring structure 4 further comprises a circumferentially-inextensible annular anchoring portion 16 having a cross-section profile of flattened conformation, disposed against an end portion of the carcass ply 3 extending axially away from the equatorial plane X-X of tyre 1. More particularly, the cross-section profile of the anchoring portion 16 extends axially away from the stiffening portion 12, preferably starting from a radially internal edge of said stiffening portion, in a direction coverging towards the geometric rotation axis of tyre 1 through an angle of convergence included between 5° and 25°, preferably of 20°, even if values different from those stated are possible.

The anchoring portion 16 preferably comprises a first annular anchoring insert 17 formed of at least one continuous elongated element, in the form of a thread or a cord of textile or metallic material, wound up to form at least one series of coils 17a disposed axially in side by side relationship in a direction corresponding to the above stated angle of convergence. Preferably, the first annular anchoring insert 17 is formed during a step immediately following deposition of the elongated lengths 10 belonging to the first series, and is disposed in a radially superposed relationship with end portions 10c axially bent outwardly, i.e. away from the equatorial plane X-X, of the elongated lengths themselves.

A second annular anchoring insert 18 may be also provided, which too is formed of at least one continuous elongated element wound up to form at least one series of coils 18a disposed axially in side by side relationship with each other and in parallel and radial superposed relationship with the coils 17a forming the first anchoring insert 17.

Preferably, the second anchoring insert 18 is formed during a step immediately following deposition of the elongated lengths 11 belonging to the second series, radially superposed on end portions 11c axially bent outwardly belonging to the elongated lengths themselves and defining, concurrently with the end portions 10c of lengths 10 belonging to the first series, the end portions of the carcass ply 3 as a whole.
An auxiliary filling body 19 may be also provided, possibly in place of one of the annular anchoring inserts 17, 18; said auxiliary filling body is radially interposed between the end portions 10c, 11c of lengths 10, 11 belonging to the first and second series. As can be seen from the accompanying figures, the auxiliary filling body 19 can be made of one piece construction with the filling body 15 belonging to the stiffening portion 12 so as to axially extend from a radially internal edge of said filling body 15.

In accordance with the present invention, also associated with the carcass structure 2 is at least one circumferential centring ridge 20 radially jutting out inwardly of the tyre from the crown portion of the carcass structure itself.

Preferably the circumferential centring ridge 20 is positioned symmetrical with the equatorial plane X-X and can have a radial dimension just as an indication included between 5 and 20 mm, and an axial dimension included between 10 and 60 mm.

The centring ridge 20 can be made immediately before, immediately after or concurrently with formation of liner 9, preferably through winding up of a continuous elongated element of elastomer material in coils disposed axially close to and/or radially superposed on each other, within a forming seat the shape of which matches that of said centring ridge and which is arranged in the toroidal support employed for building of tyre 1. The elastomer material employed for making the centring ridge can be conveniently reinforced with appropriate materials such as synthetic fibres dispersed in the elastomer material or the like, for example. In this connection, the Applicant has found it preferable to use short aramidic fibres of fibril structure, better known and available on the tyre market under the names Kevlar®-Pulp or Twaron®-Pulp. Kevlar and Twaron are registered trademarks belonging to DuPont and Akzo, respectively.

In a preferential embodiment, the centring ridge 20 has a radially internal surface 20a and side surfaces 20b extending in a circumferential extension which are substantially smooth and continuous, i.e. devoid of any grip toothing or any other type of surface projections and/or recesses adapted to cause transmission of forces by mechanical interference in a circumferential direction.

As previously said, associated with the carcass structure 2 is a belt structure 6 disposed at the crown portions formed by the elongated lengths 10, 11. Such a belt structure 6 can be made in any manner convenient for a person skilled in the art and therefore is not further described.

Then the tread band 7 and sidewalls 8 are applied to the carcass structure 2; they too can be obtained in any manner convenient for a person skilled in the art.

Exemplary embodiments of a belt structure, sidewalls and a tread band that can be advantageously adopted for complete building of tyre 1 on a toroidal support are described in document EP 919 406, in the name of the same Applicant.

When building of tyre 1 is over, said tyre lends itself to be submitted to a vulcanization step that can be carried out in any conventional manner.

In tyre 1 in accordance with the present invention, each of the beads 5 has a rest surface 5a at a radially internal position thereof, which is substantially parallel to the anchoring portion 16 or at least to the first anchoring insert 17 being part of the respective annular anchoring structure 4. The rest surface 5a of each bead 5 therefore defines, in a diametrical-section plane of tyre 1, a profile converging towards the rotation axis of the tyre itself away from an equatorial plane X-X of the latter. In the same manner as above described with reference to the anchoring portion 16, the rest surface 5a is preferably inclined relative to the rotation axis of tyre 1 through an angle corresponding, just as an indication, to 20° and preferably included between 5° and 25°, even if values out of the specific range are possible.

As shown in the accompanying figures, tyre 1 lends itself to be operatively associated with a respective rim 21 to form a tyred wheel altogether, which is generally denoted at 22.

Rim 21 has a base body 23 of substantially annular conformation carrying, at positions axially spaced apart from each other, two circumferential engagement seats 24 to be each coupled with one of the beads 5 of tyre 1.

To this aim, each engagement seat 24 has an abutment surface 24a facing radially away from a geometric rotation axis of rim 7, which is coincident with the axis of tyre 1. The abutment surface 24a has a frusto-conical conformation converging towards the rotation axis of rim 21 away from a median diametrical plane of the latter, coincident with the equatorial plane X-X of tyre 1, according to an angle which, by way of example, has a value of 20°, and preferably a value included between 5° and 25°, even if values out of the specified range are possible.

As shown in the drawings, the abutment surface 24a of each engagement seat 24 is confined between an axially external projection 24b defined at a side edge of rim 21, and an axially internal projection 24c defining an outer circumferential edge of the rim itself. The axially external 24b and axially internal 24c projections act laterally against bead 5 at the opposite ends of the rest surface 5a thereof, so as to inhibit side displacements of said bead with respect to rim 21.

Defined on the base body 23 of rim 21, preferably at a symmetric position with respect to the median plane coincident with the equatorial plane X-X of tyre 1, is at least one circumferential guide race 25 conforming in shape to the circumferential centring ridge 20 arranged on the tyre itself. The guide race 25 is axially confined between two mutually-opposite radial shoulders 26 which are spaced apart from each other preferably of a measure as high as or slightly greater than the axial dimension of the centring ridge 20 and included by way of example between 10 mm and 60 mm. The radial shoulders 26 preferably having a radial dimension as large as or slightly smaller than the radial dimension of the centring ridge 20, and at all events included by way of example between 5 and 20 mm, are adapted to act in abutment against the side surfaces 20b of the centring ridge 20 when, as will be better clarified in the following, tyre 1 is used under deflated conditions.

Preferably, the circumferential guide race 25 and consequently the radial shoulders 26 defined by it, are formed at a radially external position on a circumferential projection 27 defined in the base body 23. Said circumferential projection 27 and consequently the radial shoulders 26 formed therein, can advantageously have an outer diameter substantially as high as, and at all events not higher than, a maximum diameter of the rim measurable at the axially internal projection 24c of at least one of the circumferential seats 24. In this way it is ensured that the presence of the circumferential projection 27 and/or radial shoulders 26 will not hinder the operations required for mounting tyre 1 on rim 21, when one of the tyre beads 5 is obliged to step over the axially internal projections 24b of the circumferential engagement seats 24 and the circumferential projection 27.

Advantageously, the base body 23 of rim 21 may also have at least one circumferential groove 28 axially confined between the circumferential projection 27 and one of the engagement seats 24. In the example shown, wherein the engagement seats 24 can have the same diameter, two circumferential grooves 28 are preferably provided and they are placed at axially opposite positions relative to the circumferential projection 27,

Each of the circumferential grooves 28 is adapted to house one of the beads of tyre 1 to enable the latter to take an oblique orientation relative to the rim 21 being mounted.

In addition, the presence of each of the circumferential grooves 28 generates an additional volume within tyre 1, for the air or other inflating fluid usually provided within the tyre itself. This expedient is particularly advantageous when the invention is implemented on tyres of a particularly low-section, in which the ratio between the section height "H", measured between the base of beads 5 and the centre of the tread band 7, and the maximum tyre width "L" is approximately smaller than 0.50. In tyres of the above type in fact, the self-supporting capacity and consequently the ride comfort are penalized by the relatively low volume which is available for the air or other inflating fluid within the tyre. The additional volumes resulting from arrangement of grooves 28 enable therefore the available volume for the inflating fluid to be increase, which is an advantage for self-supporting capacity and ride comfort.

Advantageously, mutual interaction between the anchoring portion 16, stiffening portion 12 and remaining components of the carcass structure 2 is of such a nature that the stiffening and anchoring portions themselves are substantially connected with each other in a rigid manner.

In other words, each of the annular anchoring structures 4 behaves, from an operational point of view, like a substantially L-shaped monolithic structure, having a geometric centre of gravity G placed at an axially external position relative to the stiffening portion 12 and at an axially internal position relative to the axially external end edge of the anchoring portion 16.

The inflating pressure of tyre 1 gives rise to a tensioning effect on the carcass ply 3 along the elongated elements incorporated into the lengths of the first and second series 10. 11.

As described in more detail in document WO 99/64225, to which please refer for further possible explanations, this tensioning produces an counterclockwise moment around the centre of gravity G with respect to the accompanying figures, by effect of which the rest surface 5a of bead 5 is pushed, close to its axially external edge, against the abutment surface 24a of the respective engagement seat 24. Such a thrust action tends to be increased by effect of a further tensioning produced on the carcass ply 3 by the slip thrusts transmitted through the tread band 7 and the belt structure 6.

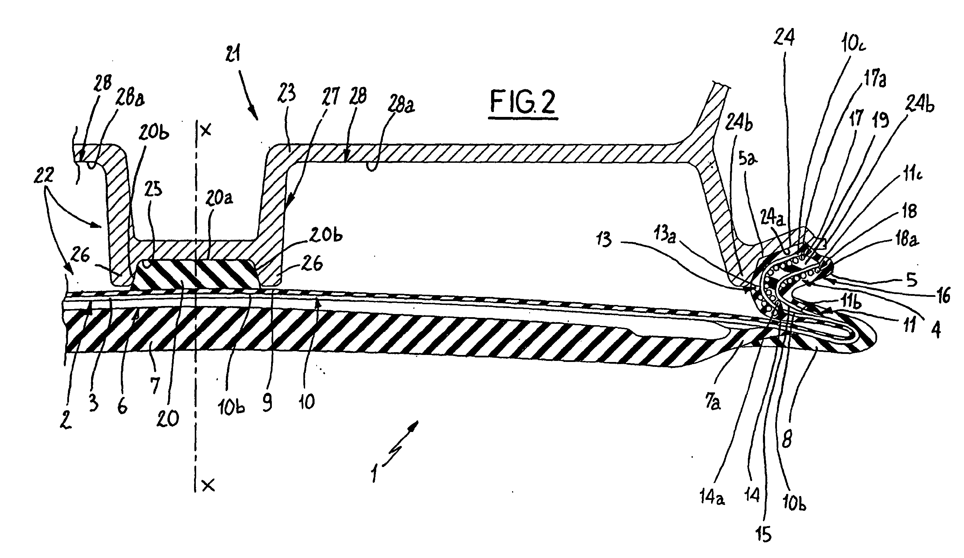

Fig. 2 shows the tyre during engagement under fully deflated conditions. As can be easily viewed, under this circumstance it is determined, under the ground-contacting area, the engagement of the circumferential centring ridge 20 in the guide race 25 arranged in rim 21. In addition, the carcass structure 2 is deformed at the sidewalls 8 tending to collapse upon themselves, thereby increasing the amount of the moment around the centre of gravity G causing the thrust action of the rest surfaces 5a against the abutment surfaces 24a of the respective engagement seats 24.

Under this circumstance, maintenance of a correct coupling relationship of beads 5 in the engagement seats 24 is absolutely ensured, even in a complete absence of inflating pressure in tyre 1. It is in fact to be noted that the frusto-conical profile of the abutment surfaces 24a forms a sufficiently emphasized radial shoulder capable of preventing bead 5 from stepping over the axially internal projection 24b, by effect of axial thrusts directed towards the equatorial plane X-X. The phenomena of removing the bead from its seat due to axial forces directed to the equatorial plane X-X are therefore to be excluded, even when such axial forces take a great value, by effect of slip thrusts transmitted to the bead 5 having an external position with respect to a bend travelled by the vehicle. On the contrary, the above thrusts further promote strengthening of the bead position in its engagement seat 24.

The axial forces directed away from the equatorial plane X-X, on the other hand of a smaller amount, usually transmitted to the bead 5 having an internal position with respect to a bend travelled by the vehicle, are in turn efficiently counteracted by the presence of the axially external projection 24b of the respective engagement seat 4. The increase in the thrust exerted by bead 5 against the abutment surface 24a due to deformation of the sidewall 8 as previously described, further inhibits the possibility of the bead itself of stepping over the axially internal projection 24c.

It is to be noted that advantageously the amount of the axial efforts transmitted to beads 5 by effect of the slip thrusts is greatly reduced, due to the engagement of the circumferential centring ridge 20 within the guide race 25 which, by means of the radial shoulders 26 acting against the side surfaces 20b of the centring ridge itself, withstands and neutralizes most of the stresses tending to cause axial displacements of tyre 1 relative to rim 21.

In addition, resting of the circumferential projection 27 of rim 21 on the inner surface of tyre 1 at the centring ridge 20 enables beads 5 to be protected from radial loads due to the vehicle weight.

Maintenance of an efficient coupling, under deflated conditions of the tyre, between beads 5 and the engagement seats 24 enables transmission of the tangential forces necessary to ensure the forward running of the vehicle as well as slowing down of same in case of braking to depend and rely on the beads themselves, without being it required, to this aim, to arrange grip toothings between tyre 1 and rim 21 close to the centring ridge 20. On the contrary, in accordance with a preferential feature of the invention, both the centring ridge 20 and the radial shoulders 26 of rim 21 have smooth and continuous circumferential surfaces, devoid of any grip toothing, to enable mutual sliding strokes in a longitudinal direction which are appropriate to compensate for differences in the circumferential extension which may be found between the centring ridge and radial shoulders.

In order to promote said sliding strokes, interposition of appropriate lubricants may be also provided between the surfaces of the guide race 25 and the centring ridge 20, and/or application of antifriction material on one or both said surfaces.

Unlike the results found with reference to the solutions described in documents DE 36 17 381 and US 4,572,262, the tyre in accordance with the invention, above all when of the low-section type, is also free from any risk of disengagement of the circumferential centring ridge 20 from the respective guide race 25 during running. In this connection it is to be noted that the construction features of the annular anchoring structures 4 are of such a nature that the remaining structural components of tyre 1 are efficiently maintained in a centred position with respect to rim 21 even along the whole length of the circumferential extension that is not affected by the ground-contacting area, where the absence of vertical loads due to the vehicle weight causes moving away and consequent disengagement of the centring ridge 20 from the guide race 25.

In conclusion, the original synergistic exploitation of the effects produced by beads for reverse-flange rims and the effects achieved by engagement of the circumferential tyre ridge into the guide race carried by the rim enables the tyre to possess the desired self-supporting functions without its qualities of ride comfort under normal run conditions being absolutely impaired.

In this connection it should be noted that the intended self-support functions have been achieved without introducing additional inserts that would make the tyre sidewalls stiffer and would increase the torsional rigidity too much.

It will be also recognized that the invention lends itself to be efficiently accomplished without substantially involving any increase in the tyre building costs. In fact, as above described, the circumferential centring ridge can be easily obtained by a production process carried out on a rigid toroidal support, on which the whole tyre can be advantageously formed.

Thus, all problems connected with accomplishment, storage and management of semi-finished products that are common to tyre building processes of a traditional conception are eliminated.

## Claims

1. A wheel comprising a tyre (1)and a rim said rim comprising:
- a base body (23) of a substantially annular conformation carrying, at side edges axially spaced apart from each other, two circumferential seats (24) each arranged to engage a respective bead (5) of the tyre (1), each of its engagement seats (24) defining an abutment surface (24a) radially facing away from a geometric rotation axis of the rim (21) and having a frusto-conical configuration converging away from a median diametrical plane of the rim itself;
said tyre comprising:
- a carcass structure (2) having at least one carcass ply (3) with axially-opposite circumferential edges in engagement with respective annular reinforcing structures (4) which are disposed in coaxial relationship with a rotation axis of the tyre (1) at positions axially spaced apart from each other and which are each incorporated into a tyre bead (5);
- a belt structure (6) applied to the carcass structure (2) at a radially external position thereof;
- a tread band (7) applied to the belt structure (6) at a radially external position thereof;
- at least one pair of sidewalls (8) each extending between one of said beads (5) and a side edge (7a) of the tread band (7), at an axially external position with respect to the carcass structure (3),
each of said beads (5), at a radially internal position thereof, having a rest surface (5a) that, in a diametrical section plane of the tyre, defines a profile converging towards the rotation axis of the tyre (1) away from an equatorial plane of the latter,
**characterized in that**
with said carcass structure (2) is in addition associated at least one circumferential centring ridge (20) radially jutting out inwardly of the tyre (1) from a crown portion of the carcass structure itself, axially confined between the opposite side edges (7a) of the tread band (7),
said base body (23) has at least two opposite radial shoulders (26) axially spaced apart from each other to act in abutment against said at least one circumferential centring ridge (20), said radial shoulders (26) having an outer diameter that does not exceed a maximum diameter of the rim measurable close to at least one of said engagement seats (24).

2. A wheel as claimed in claim 1, wherein each of said annular reinforcing structures (4) comprising:
at least one stiffening portion (12) applied against said at least one carcass ply (3) and having a cross-section profile extending away from the rotation axis of the tyre (1) ;
- at least one circumferentially inextensible anchoring portion (16), having a cross-section profile of flattened conformation, extending axially away from the stiffening portion (12) in a direction converging towards the geometric rotation axis of the tyre (1) away from the equatorial plane (X-X) of the latter.

3. A wheel as claimed in claim 1, wherein said anchoring portion (16) being applied against an end portion (10c, 11c) of said carcass ply (3), extending axially away from the equatorial plane (X-X) of the tyre (1).

4. A wheel as claimed in claim 1, wherein, close to said at least one circumferential ridge (20), further transverse projections for engagement into corresponding seats arranged on a mounting rim (21) of the tyre (1) are not present.

5. A wheel as claimed in claim 1, wherein said circumferential ridge (20) is obtained by winding up at least one continuous elongated element in coils that are disposed axially close to and/or radially superposed on each other within a forming seat arranged in a toroidal support the shape of which matches the inner surface extension of said tyre (1).

6. A wheel as claimed in claim 1, wherein the cross-section profile of said annular reinforcing structure (4) has a geometric centre of gravity (G) placed at such a position that an axially external end edge of said rest surface (5a) is pushed towards the rotation axis of the tyre (1) following a tension generated along said at least one carcass ply (3).

7. A wheel as claimed in claim 2, wherein the cross-section profile of the annular reinforcing structure (4) has a geometric centre of gravity (G) placed at an axially external position relative to the stiffening portion (12) and at an axially internal position relative to an axially external end edge of the anchoring portion (16).

8. A wheel as claimed in claim 2, wherein said anchoring portion (16) is disposed substantially close to a radially internal edge of the stiffening portion (12).

9. A wheel as claimed in claim 2, wherein said anchoring portion (16) comprises at least one continuous elongated element (17, 18) wound up in coils (17a, 18a) disposed axially in side by side relationship.

10. A wheel as claimed in claim 2, wherein said stiffening portion (12) comprises at least one continuous elongated element (13, 14) wound up in radially superposed coils (13a, 14a).

11. A wheel as claimed in claim 1, wherein said circumferential centring ridge (20) has a radial dimension included between 5 and 20 mm.

12. A wheel as claimed in claim 1, wherein said circumferential centring ridge (20) has an axial dimension included between 10 and 60 mm.

13. A wheel as claimed in claim 1, showing a section ratio smaller than 0.50.

14. A wheel as claimed in claim 1, wherein said at least one carcass ply (3) comprises elongated lengths (10, 11) circumferentially distributed around a geometric axis of the tyre (1) and each extending in a U-shaped configuration to define two side portions (10a, 11a) spaced apart from each other in an axial direction and one crown portion (10B) extending at a radially external position between the side portions (10a, 11a).

15. A wheel as claimed in claim 14, wherein each of the elongated lengths (10, 11) extends in a deposition plane offset in parallel relative to a meridian plane passing through the geometric rotation axis of the tyre (1).

16. A wheel as claimed in claim 15, wherein the side portion (10a, 11a) of each elongated length (10, 11) has a predetermined inclination relative to a direction radial to the geometric axis of the tyre (1), said crown portions (10b) being each oriented in a plane radial to the geometric axis itself.

17. A wheel as claimed in claim 16, comprising a first (10) and a second (11) series of elongated lengths circumferentially distributed in a mutually alternated sequence, the side portions (10a, 11a) of the lengths belonging to the first and second series (10, 11) respectively being disposed according to respectively crossed orientations.

18. A wheel as claimed in claim 1, wherein close to said radial shoulders (26) the absence of any axial grooves arranged to interact with respective projections carried by the tyre (1) is provided.

19. A wheel as claimed in claim 1, wherein said radial shoulders (26) confine a circumferential guide race (25) in the base body, the shape of which matches that of said circumferential ridge (20).

20. A wheel as claimed in claim 1, wherein said radial shoulders (26) have a radial dimension included between 5 and 20 mm.

21. A wheel as claimed in claim 1, wherein said radial shoulders are spaced apart by an axial measure included between 10 and 60 mm.

22. A wheel as claimed in claim 1, wherein said radial shoulders (26) are defined in a radially external position on a circumferential projection (27) defined in the base body (23).

23. A wheel as claimed in claim 1, wherein the base body (23) has at least one circumferential groove (28) defined between one of said engagement seats (24) and one of said radial shoulders (26).

24. A rim comprising:
- a base body (23) of a substantially annular conformation carrying, at side edges axially spaced apart from each other, two circumferential seats (24) each arranged to engage a respective bead (5) of a tyre (1),
each of its engagement seats (24) defining an abutment surface (24a) radially facing away from a geometric rotation axis of the rim (21) and having a frusto-conical configuration converging away from a median diametrical plane of the rim itself;
**characterized in that**
the base body (23) has at least two opposite radial shoulders (26) axially spaced apart from each other to act in abutment against at least one circumferential centring ridge (20) radially jutting out inwardly from a carcass structure (2) of the tyre (1), said radial shoulders (26) having an outer diameter that does not exceed a maximum diameter of the rim measurable close to at least one of said engagement seats (24).

25. A rim as claimed in claim 24, wherein close to said radial shoulders (26) the absence of any axial grooves arranged to interact with respective projections carried by the tyre (1) is provided.

26. A rim as claimed in claim 24, wherein said radial shoulders (26) confine a circumferential guide race (25) in the base body, the shape of which matches that of said circumferential ridge (20).

27. A rim as claimed in claim 24, wherein said radial shoulders (26) have a radial dimension included between 5 and 20 mm.

28. A rim as claimed in claim 24, wherein said radial shoulders are spaced apart by an axial measure included between 10 and 60 mm.

29. A rim as claimed in claim 24, wherein said radial shoulders (26) are defined in a radially external position on a circumferential projection (27) defined in the base body (23).

30. A rim as claimed in claim 24, wherein the base body (23) has at least one circumferential groove (28) defined between one of said engagement seats (24) and one of said radial shoulders (26).

## Patentansprüche

1. Rad mit einem Reifen (1) und einer Felge,
- wobei die Feige
-- einen Grundkörper (23) mit im Wesentlichen einer Ringform aufweist, der an axial voneinander beabstandeten Seitenrändern zwei Umfangssitze (24) trägt, von denen jeder für einen Eingriff mit einem entsprechenden Wulst (5) des Reifens (1) angeordnet ist, und
-- jeder seiner Eingriffssitze (24) eine Anschlagfläche (24a) bildet, die radial von einer geometrischen Drehachse der Felge (21) weg weist und eine Kegelstumpfform hat, die von einer diametralen Mittelebene der Felge weg konvergiert, und
- wobei der Reifen
-- einen Karkassenaufbau (2), der wenigstens eine Karkassenlage (3) mit axial gegenüberliegenden Umfangsrändern hat, die in Eingriff mit entsprechenden ringförmigen Verstärkungsaufbauten (4) stehen, die in einer koaxialen Beziehung zu der Drehachse des Reifens (1) an Positionen axial im Abstand voneinander angeordnet sind und von denen jeder in einen Reifenwulst (5) eingeschlossen ist,
-- einen Gurtaufbau (6), der auf den Karkassenaufbau (2) an einer radial äußeren Position von ihm aufgebracht ist,
-- ein Laufflächenband (7), das auf den Gurtaufbau (6) an einer radial äußeren Position von ihm aufgebracht ist, und
-- wenigstens ein Paar von Seitenwänden (8) aufweist, von denen sich jede zwischen den Wulsten (5) und einem Seitenrand (7a) des Laufflächenbandes (7) an einer axial äußeren Position bezüglich des Karkassenaufbaus (3) erstreckt,
-- wobei jeder der Wulste (5) an einer radial inneren Position eine Auflagefläche (5a) hat, die in einer diametralen Schnittebene des Reifens ein Profil bildet, das zu der Drehachse des Reifens (1) hin und von seiner Äquatorialebene weg konvergiert,
**dadurch gekennzeichnet,**
- **dass** dem Karkassenaufbau (2) zusätzlich wenigstens ein Umfangszentrierrücken (20) zugeordnet ist, der radial von dem Reifen (1) nach innen von einem Kronenabschnitt des Karkassenaufbaus aus vorsteht, der axial zwischen den gegenüberliegenden Seitenrändern (7a) des Laufflächenbandes (7) begrenzt ist,
- **dass** der Grundkörper (23) wenigstens zwei gegenüberliegende radiale Schultern (26) hat, die axial im Abstand voneinander angeordnet sind, so dass sie als Anschlag an dem wenigstens einen Umfangszentrierrücken (20) wirken, und
- **dass** die radialen Schultern (26) einen Außendurchmesser haben, der einen maximalen Durchmesser der Felge nicht überschreitet, der nahe an wenigstens einem der Eingriffsitze (24) messbar ist.

2. Rad nach Anspruch 1, bei welchem jeder der ringförmigen Verstärkungsaufbauten (4)
- wenigstens einen Versteifungsabschnitt (12), der an wenigstens einer Karkassenlage (3) anliegt und ein Querschnittsprofil hat, das sich von der Drehachse des Reifens (1) weg erstreckt, und
- wenigstens einen am Umfang nicht dehnbaren Verankerungsabschnitt (16) mit einem Querschnittsprofil mit abgeflachter Form aufweist, der sich axial von dem Versteifungsabschnitt (12) in eine Richtung weg erstreckt, die zu der geometrischen Drehachse des Reifens (1) hin und von seiner Äquatorialebene (X-X) weg konvergiert.

3. Rad nach Anspruch 1, bei welchem der Verankerungsabschnitt (16) an einem Endabschnitt (10c, 11c) der Karkassenlage (3) anliegt, der sich axial von der Äquatorialebene (X-X) des Reifens (1) weg erstreckt.

4. Rad nach Anspruch 1, bei welchem nahe an dem wenigstens einen Umfangsrücken (20) keine weiteren Quervorsprünge für einen Eingriff mit entsprechenden, an der Montagefelge (21) des Reifens (1) angeordneten Sitzen vorhanden sind.

5. Rad nach Anspruch 1, bei welchem der Umfangsrücken (20) **dadurch** erhalten wird, dass wenigstens ein fortlaufendes langgestrecktes Element in Windungen gelegt wird, die axial nahe aneinander und/oder radial aufeinander in einem formenden Sitz angeordnet sind, der sich in einem torosförmigen Träger befindet, dessen Form der inneren Oberflächenerstreckung des Reifens (1) entspricht.

6. Rad nach Anspruch 1, bei welchem das Querschnittsprofil des ringförmigen Verstärkungsaufbaus (4) einen geometrischen Schwerpunkt (G) hat, der an einer solchen Position angeordnet ist, dass ein axial äußerer Endrand der Auflagefläche (5a) zu der Drehachse des Reifens (1) hin als Folge einer Zugspannung gedrückt wird, die längs wenigstens einer Karkassenlage (3) erzeugt wird.

7. Rad nach Anspruch 2, bei welchem das Querschnittsprofil des ringförmigen Verstärkungsaufbaus (4) einen geometrischen Schwerpunkt (G) hat, der an einer axial äußeren Position bezüglich des Versteifungsabschnitts (12) und an einer axial inneren Position bezüglich eines axial äußeren Endrandes des Verankerungsabschnitts (16) angeordnet ist.

8. Rad nach Anspruch 2, bei welchem der Verankerungsabschnitt (16) im Wesentlichen nahe an einem radial inneren Rand des Versteifungsabschnitts (12) angeordnet ist.

9. Rad nach Anspruch 2, bei welchem der Verankerungsabschnitt (16) wenigstens ein fortlaufendes langgestrecktes Element (17, 18) aufweist, das in Windungen (17a, 18a) gelegt ist, die axial in einer Beziehung Seite an Seite angeordnet sind.

10. Rad nach Anspruch 2, bei welchem der Versteifungsabschnitt (12) wenigstens ein fortlaufendes langgestrecktes Element (13, 14) aufweist, das in radial aufeinandergelegte Windungen (13a, 14a) gelegt ist.

11. Rad nach Anspruch 1, bei welchem der Umfangszentrierrücken (20) eine radiale Abmessung von 5 bis 20 mm hat.

12. Rad nach Anspruch 1, bei welchem der Umfangszentrierrücken (20) eine axiale Abmessung von 10 bis 60 mm hat.

13. Rad nach Anspruch 1, welches ein Querschnittsverhältnis von weniger als 0,50 zeigt.

14. Rad nach Anspruch 1, bei welchem die wenigstens eine Karkassenlage (3) langgestreckte Längenstücke (10, 11) aufweist, die am Umfang um die geometrische Achse des Reifens (1) herum verteilt sind und von denen sich jedes in einer U-Form erstreckt und zwei Seitenabschnitte (10a, 11a), die in axialer Richtung voneinander beabstandet sind, und einen Kronenabschnitt (10b) bildet, der sich an einer radial äu-ßeren Position zwischen den Seitenabschnitten (10a, 11a) erstreckt.

15. Rad nach Anspruch 14, bei welchem jedes der langgestreckten Längenstücke (10, 11) sich in einer Ablegeebene erstreckt, die parallel bezüglich einer Meridianebene versetzt ist, die durch die geometrische Drehachse des Reifens (1) hindurchgeht.

16. Rad nach Anspruch 15, bei welchem der Seitenabschnitt (10a, 11a) eines jeden langgestreckten Längenstücks (10, 11) eine vorgegebene Neigung bezüglich einer zur geometrischen Achse des Reifens (1) radialen Richtung hat, wobei die Kronenabschnitte (10b) jeweils in einer Ebene radial zur geometrischen Achse ausgerichtet sind.

17. Rad nach Anspruch 16, welches eine erste Reihe (10) und eine zweite Reihe (11) von langgestreckten Längenstücken aufweist, die am Umfang in einer gegenseitigen abwechselnden Sequenz verteilt sind, wobei die Seitenabschnitte (10a, 11a) der Längenstücke, die zu der ersten Reihe (10) bzw. der zweiten Reihe (11) gehören, in jeweils gekreuzten Ausrichtungen angeordnet sind.

18. Rad nach Anspruch 1, bei welchem nahe an den radialen Schultern (26) für das Fehlen axialer Nuten, die angeordnet sind, um mit entsprechenden, von dem Reifen (1) getragenen Vorsprüngen zusammenzuwirken, gesorgt ist.

19. Rad nach Anspruch 1, bei welchem die radialen Schultern (26) eine Umfangsführungsrinne (25) in dem Grundkörper begrenzen, deren Form an die des Umfangsrückens (20) angepasst ist.

20. Rad nach Anspruch 1, bei welchem die radialen Schultern (26) eine radiale Abmessung von 5 bis 20 mm haben.

21. Rad nach Anspruch 1, bei welchem die radialen Schultern mit einer axialen Abmessung von 10 bis 60 mm voneinander beabstandet sind.

22. Rad nach Anspruch 1, bei welchem die radialen Schultern (26) in einer radial äußeren Position an einem Umfangsvorsprung (27) ausgebildet sind, der in dem Grundkörper (23) vorgesehen ist.

23. Rad nach Anspruch 1, bei welchem der Grundkörper (23) wenigstens eine Umfangsnut (28) hat, die zwischen einem der Eingriffsitze (24) und einer der radialen Schultern (26) ausgebildet ist.

24. Felge
- mit einem Grundkörper (23) mit im Wesentlichen einer Ringform, der an axial voneinander beabstandeten Seitenrändern zwei Umfangssitze (24) trägt, von denen jeder für den Eingriff mit einem entsprechenden Wulst (5) eines Reifens (1) angeordnet ist,
- wobei jeder seiner Eingriffssitze (24) eine Anschlagfläche (24a) bildet, die radial von einer geometrischen Drehachse der Felge (21) weg weist und eine Kegelstumpfform hat, die von einer diametralen Mittelebene der Felge weg konvergiert,
**dadurch gekennzeichnet,**
- **dass** der Grundkörper (23) wenigstens zwei gegenüberliegende radiale Schultern (26) hat, die axial voneinander beabstandet sind und in Anlage an wenigstens einem Umfangszentrierrücken (20) wirken, der radial nach innen von einem Karkassenaufbau (2) des Reifens (1) vorsteht, und
- **dass** die radialen Schultern (26) einen Außendurchmesser haben, der einen maximalen Durchmesser der Felge nicht überschreitet, der nahe an wenigstens einem der Eingriffssitze (24) messbar ist.

25. Felge nach Anspruch 24, bei welcher nahe an den radialen Schultern (26) für ein Fehlen irgendwelcher axialer Nuten, die angeordnet sind, um mit entsprechenden, von dem Reifen (1) getragenen Vorsprüngen zusammenzuwirken, gesorgt ist.

26. Felge nach Anspruch 24, bei welcher die radialen Schultern (26) eine Umfangsführungsrinne (25) in dem Grundkörper begrenzen, deren Form an die des Umfangsrückens (20) angepasst ist.

27. Felge nach Anspruch 24, bei welchem die radialen Schultern (26) eine radiale Abmessung von 5 bis 20 mm haben.

28. Felge nach Anspruch 24, bei welcher die radialen Schultern mit einer axialen Abmessung von 10 bis 60 mm voneinander beabstandet sind.

29. Felge nach Anspruch 24, bei welcher die radialen Schultern (26) in einer radial äußeren Position an einem Umfangsvorsprung (27) ausgebildet sind, der in dem Grundkörper (23) vorgesehen ist.

30. Felge nach Anspruch 24, bei welcher der Grundkörper (23) wenigstens eine Umfangsnut (28) hat, die zwischen einem der Eingriffssitze (24) und einer der radialen Schultern (26) ausgebildet ist.

## Revendications

1. Roue, comprenant un pneumatique (1) et une jante, ladite jante comprenant :
- un corps de base (23) de forme sensiblement annulaire portant, sur des bords latéraux espacés axialement l'un de l'autre, deux sièges circonférentiels (24) agencés chacun pour se trouver au contact d'un talon respectif (5) du pneumatique (1),
chacun de ses sièges d'engagement (24) définissant une surface de butée (24a) orientée radialement à l'opposé d'un axe géométrique de rotation de la jante (21) et ayant une configuration tronconique convergeant en s'éloignant d'un plan diamétral médian de la jante elle-même ;
ledit pneumatique comprenant :
- une structure de carcasse (2) ayant au moins un pli (3) de carcasse avec des bords périphériques axialement opposés au contact de structures annulaires de renforcement respectives (4) qui sont disposées de manière coaxiale par rapport à un axe de rotation du pneumatique (1) à des emplacements espacés axialement les uns des autres et qui sont intégrées chacune dans un talon (5) de pneumatique ;
- une structure de ceinture (6) appliquée sur la structure de carcasse (2) dans une position radialement externe de celle-ci ;
- une bande de roulement (7) appliquée sur la structure de ceinture (6) dans une position radialement externe de celle-ci ;
- au moins une paire de flancs (8) s'étendant chacun entre un desdits talons (5) et un bord latéral (7a) de la bande de roulement (7), dans une position axialement externe par rapport à la structure de carcasse (3),
chacun desdits talons (5), dans une position radialement interne de ceux-ci, ayant une surface d'appui (5a) qui, dans un plan en coupe diamétrale du pneumatique, définit un profil convergeant vers l'axe de rotation du pneumatique (1) depuis un plan équatorial de ce dernier,
**caractérisée en ce que**
à ladite structure de carcasse (2) est en outre associée au moins une crête circonférentielle de centrage (20) faisant saillie radialement vers l'intérieur du pneumatique (1) depuis une partie formant bombé de la structure de carcasse elle-même, délimitée axialement entre les bords latéraux opposés (7a) de la bande de roulement (7),
ledit corps de base (23) a au moins deux épaulements radiaux opposés (26) espacés axialement les uns des autres pour venir buter contre ladite au moins une crête circonférentielle de centrage (20), lesdits épaulements radiaux (26) ayant un diamètre extérieur qui ne dépasse pas un diamètre maximal de la jante, mesurable près d'au moins un desdits sièges d'engagement (24).

2. Roue selon la revendication 1, dans laquelle chacune desdites structures annulaires de renforcement (4) comporte :
- au moins une partie de raidissement (12) appliquée contre ledit au moins un pli (3) de carcasse et ayant, en coupe transversale, un profil s'étendant depuis l'axe de rotation du pneumatique (1) ;
- au moins une partie d'ancrage (16) à pourtour non extensible ayant, en coupe transversale, un profil de forme aplatie, s'étendant axialement depuis la partie de raidissement (12) dans une direction convergeant vers l'axe géométrique de rotation du pneumatique (1) depuis le plan équatorial (X-X) de ce dernier.

3. Roue selon la revendication 1, dans laquelle ladite partie d'ancrage (16) est appliquée contre une partie d'extrémité (10c, 11c) dudit pli (3) de carcasse, s'étendant axialement depuis le plan équatorial (X-X) du pneumatique (1).

4. Roue selon la revendication 1, dans laquelle, près de ladite au moins une crête circonférentielle (20), il n'y a pas d'autre saillie transversale destinée à s'engager dans des sièges correspondants disposés sur une jante de montage (21) du pneumatique (1).

5. Roue selon la revendication 1, dans laquelle ladite crête circonférentielle (20) est obtenue en enroulant au moins un élément allongé continu en spires disposées axialement à proximité les unes des autres et/ou superposées radialement les unes aux autres à l'intérieur d'un siège de mise en forme disposé sur un support toroïdal dont la forme correspond à celle du prolongement de la surface intérieure dudit pneumatique (1).

6. Roue selon la revendication 1, dans laquelle, en coupe transversale, le profil de ladite structure annulaire de renforcement (4) a un centre géométrique de gravité (G) placé dans une position telle qu'un bord d'extrémité axialement externe de ladite surface d'appui (5a) est poussé vers l'axe de rotation du pneumatique (1) à la suite d'une tension générée le long dudit au moins un pli (3) de carcasse.

7. Roue selon la revendication 2, dans laquelle, en coupe transversale, le profil de la structure annulaire de renforcement (4) a un centre géométrique de gravité (G) placé dans une position axialement externe par rapport à la partie de raidissement (12) et dans une position axialement interne par rapport à un bord d'extrémité axialement externe de la partie d'ancrage (16).

8. Roue selon la revendication 3, dans laquelle ladite partie d'ancrage (16) est disposée tout près d'un bord radialement interne de la partie de raidissement (12).

9. Roue selon la revendication 2, dans laquelle ladite partie d'ancrage (16) comporte au moins un élément allongé continu (17, 18) enroulé en spires (17a, 18a) disposées axialement côte à côte.

10. Roue selon la revendication 2, dans laquelle ladite partie de raidissement (12) comporte au moins un élément allongé continu (13, 14) enroulé en spires à superposition radiale (13a, 14a).

11. Roue selon la revendication 1, dans laquelle ladite crête circonférentielle de centrage (20) a une dimension radiale de 5 à 20 mm.

12. Roue selon la revendication 1, dans laquelle ladite crête circonférentielle de centrage (20) a une dimension axiale de 10 à 60 mm.

13. Roue selon la revendication 1, présentant un rapport de section inférieur à 0,50.

14. Roue selon la revendication 1, dans laquelle ledit au moins un pli (3) de carcasse comporte des longueurs allongées (10, 11) réparties dans la direction circonférentielle autour d'un axe géométrique du pneumatique (1) et s'étendant chacun suivant une configuration en U pour définir deux parties latérales (10a, 11a) espacées l'une de l'autre dans une direction axiale et une partie formant bombé (10b) s'étendant dans une position radialement externe entre les parties latérales (10a, 11a).

15. Roue selon la revendication 14, dans laquelle chacune des longueurs allongées (10, 11) s'étend dans un plan de dépôt décalé parallèlement par rapport à un plan méridien passant par l'axe géométrique de rotation du pneumatique (1).

16. Roue selon la revendication 15, dans laquelle la partie latérale (10a, 11a) de chaque longueur allongée (10, 11) a une inclinaison prédéterminée par rapport à une direction radiale à l'axe géométrique du pneumatique (1), lesdites parties formant bombés (10b) étant orientées chacune dans un plan radial par rapport à l'axe géométrique lui-même.

17. Roue selon la revendication 16, comprenant une première (10) et une seconde (11) séries de longueurs allongées réparties circonférentiellement dans un ordre mutuellement alterné, les parties latérales (10a, 11a) des longueurs appartenant à la première et à la seconde séries (10, 11) étant respectivement disposées suivant des orientations respectivement croisées.

18. Roue selon la revendication 1, dans laquelle, près desdits épaulements radiaux (26), l'absence de toute crête axiale destinée à coopérer avec des saillies respectives portées par le pneumatique (1) est assurée.

19. Roue selon la revendication 1, dans laquelle lesdits épaulements radiaux (26) délimitent dans le corps de base une piste circonférentielle de guidage (25) dont la forme correspond à celle de ladite crête circonférentielle (20).

20. Roue selon la revendication 1, dans laquelle lesdits épaulements radiaux (26) ont une dimension radiale de 5 à 20 mm.

21. Roue selon la revendication 1, dans laquelle lesdits épaulements radiaux sont espacés axialement l'un de l'autre d'une distance de 10 à 60 mm.

22. Roue selon la revendication 1, dans laquelle lesdits épaulements radiaux (26) sont définis dans une position radialement externe d'une saillie périphérique (27) définie dans le corps de base (23).

23. Roue selon la revendication 1, dans laquelle le corps de base (23) a au moins une gorge périphérique (28) définie entre l'un desdits sièges d'engagement (24) et l'un desdits épaulements radiaux (26).

24. Jante, comprenant :
- un corps de base (23) de forme sensiblement annulaire portant, sur des bords latéraux espacés axialement l'un de l'autre, deux sièges circonférentiels (24) conçus chacun pour venir contre un talon respectif (5) d'un pneumatique (1),
chacun des sièges d'engagement (24) définissant une surface de butée (24a) orientée radialement à l'opposé d'un axe géométrique de rotation de la jante (21) et ayant une configuration tronconique convergeant à l'opposé d'un plan diamétral médian de la jante elle-même ;
**caractérisée en ce que**
le corps de base (23) a au moins deux épaulements radiaux opposés (26) espacés axialement les uns des autres pour agir en butée contre au moins une crête circonférentielle de centrage (20) faisant radialement saillie vers l'intérieur depuis une structure de carcasse (2) du pneumatique (1), lesdits épaulements radiaux (26) ayant un diamètre extérieur qui ne dépasse pas un diamètre maximal de la jante, mesurable à proximité d'au moins un desdits sièges d'engagement (24).

25. Jante selon la revendication 24, dans laquelle, à proximité desdits épaulements radiaux (26), l'absence de toute gorge axiale destinée à coopérer avec des saillies respectives portées par le pneumatique (1) est assurée.

26. Jante selon la revendication 24, dans laquelle lesdits épaulements radiaux (26) délimitent une piste circonférentielle de guidage (25) dans le corps de base, la forme de la piste correspondant à celle de ladite crête circonférentielle (20).

27. Jante selon la revendication (24), dans laquelle lesdits épaulements radiaux (26) ont une dimension radiale de 5 à 20 mm.

28. Jante selon la revendication 24, dans laquelle lesdits épaulements radiaux sont espacés les uns des autres par une distance axiale de 10 à 60 mm.

29. Jante selon la revendication 24, dans laquelle lesdits épaulements radiaux (26) sont définis à un emplacement radialement externe sur une saillie circonférentielle (27) définie dans le corps de base (23).

30. Jante selon la revendication 24, dans laquelle le corps de base (23) a au moins une gorge circonférentielle (28) définie entre l'un desdits sièges d'engagement (24) et l'un desdits épaulements radiaux (26).
